# EUROPEAN PATENT APPLICATION

(11) **EP 1 683 564 A2**
(43) Date of publication of application: **26.07.2006**
(21) Application number: 05027485.1
(22) Date of filing: 15.12.2005
(51) Int. Cl.: B01D 53/56

(54) **Method for removing nitrogen oxides NOx using a material absorbing said oxides**

(30) Priority: 22.12.2004 IT MI20042455
(71) Applicant: SÜD - CHEMIE CATALYSTS ITALIA S.R.L., 28100 Novara (IT)
(72) Inventor: Conca, Esterino, 28100 Novara (IT); Rubini, Carlo, 22020 San Fermo Della Battaglia (IT); Petrini, Guido, 28066 GALLIATE (IT)
(74) Representative: Alagem Modiano, Lara S.

(57) **Abstract**

Method for removing nitrogen oxides NOₓ from gas mixtures that contain them, comprising contacting of the gas mixtures with an absorbent material comprising compounds having formula CaCuO₂ and/or Ca_{0.83}CuO₂ providing X-ray diffraction powder spectra that correspond, for the CaCuO₂ compound, to JCPDS card 48-197 and, for the Ca_{0.83} CuO₂, to JCPDS card 48-212, or mixtures of said compounds or compositions containing them.

## Description

The present invention relates to a method for removing nitrogen oxides NOₓ from gas mixtures which contain them by using an absorbent material which comprises compounds having formula CaCuO₂ and Ca_{0.83} CuO₂ which provide specific X-ray diffraction (XRD) spectra.

The invention relates in particular to a method in which the absorbent compounds are used dispersed on porous inorganic carriers.

The literature (J. Am. Ceram. Soc. Vol. 72(8) 1545-49 (1989)) describes a compound having formula CaCuO₂, and provides the XRD powder spectrum thereof, which corresponds to JCPDS card 46-54, and the crystallographic structure (orthorhombic cell with a=10.581 Å, b=2.8122 Å, c=6.3245 Å).

J. Res. Not. Inst. Stand. Technol. Vol. 96, p. 469 (1996) describes a Ca_{0.83}CuO₂ compound having an orthorhombic crystallographic structure with centered faces with a=2.80470 Å, b=6.32100 Å, c=10.57300 Å, a/b=0.44371, c/b=2.25464) and with an XRD spectrum that corresponds to JCPDS card 48-212.

The compound is prepared by addition of CaCO₃ to solutions in formic acid of CaCO₃ . Cu(OH)₂ . 2H₂O, evaporation of the solutions and heating of the powder at 600 °C for 48 hours. J. Chem. Soc. Commun., page 1165 (1990), states that the compound having the formula CaCuO₂ for which a brief description of the preparation method is provided (from solutions of acetates and nitrates of Ca and Cu evaporated to dryness, and the residue calcined at 1023 K for 5 hours) but no mention regarding the XRD spectrum is given, has a negligible NO absorption property.

USP 6,514,320 B 1 indicates that the CaCuO₂ compound that provides a XRD powder spectrum that corresponds to JCPDS card 46-54 is an effective absorbent of nitrogen oxides. No indications are given as to the preparation method.

It has now been found unexpectedly that compounds having the formula Ca_{0.83}CuO₂ and CaCuO₂ that provide an XRD powder spectrum which corresponds respectively to JCPDS cards 48-212 and 48-197 and mixtures of said compounds have high absorption properties for NOₓ oxides. Compositions in which the Ca/Cu ratio ranges from 0.2 to 0.94 and from 0.95 to 2 also have satisfactory absorption properties.

Moreover, it has been found, and this is an additional aspect of the present invention, that compositions comprising Mn containing compounds, in which the Ca/Cu ratio is comprised from 0.83 to 1 and the Mn/Cu ratio ranges from 0.1 to 0.9, are endowed with high absorption capability when they are supported on porous inorganic oxides, particularly gamma alumina.

Preferably, the compositions have a Ca/Cu ratio of 0.83 and Mn/Cu ratio from 0.2 to 0.4.

The compositions are supported on gamma alumina in quantity generally comprised from 5 to 20% by weight.

The compounds usable in the method according to the invention are prepared from solutions of formates, acetates, nitrates, of calcium and copper optionally complexed with citric acid, evaporating them to dryness and calcining the residue at temperatures in the range of 550-750 °C.

As an alternative, solutions of soluble salts of copper and calcium are treated with sodium carbonate/bicarbonate in slight excess. The precipitates, after thickening at temperatures of 20-80 °C, are washed until the sodium ions disappear, and then dried and calcined at temperatures of 550-750 °C.

The supporting on the porous inorganic oxides, preferably microspheroidal gamma alumina having a specific area from 90 to 260 m²/g, porosity of 0.4 - 0.6 cc/g, in which the particles having diameter from 40 to 90 microns are at most 78% by weight and the particles having diameter from 20 to 125 microns are at least 96%, is performed by impregnating one or more times the carrier with aqueous solutions which contain soluble salts of copper and calcium (for example acetates, formates, nitrates) in the appropriate atomic ratio. In the case of multiple impregnations, the product is dried at 150 °C for one night prior to the subsequent impregnation. The final product is activated at temperatures from 550 to 750 °C for 2-100 hours.

The absorption test for the supported compounds is performed by determining the time needed by the gas mixture (NOₓ, approximately 1000 ppm (by volume), O₂ approximately 3%, remainder N₂) sent to the absorber with space velocity GHSV of approximately 5000h⁻¹ at the temperature of 20 °C or 285 °C, to exit from the absorber with a NOₓ concentration lower than 100 ppm (by volume). This time determines the efficiency of the sample.

The unsupported compounds are evaluated in a test in which the gas mixture containing 3750 ppm (by volume) of NOₓ, 5% O₂, remainder N₂, is made to flow over a boat-shaped small vessel containing the sample, which is placed in a tubular reactor for a maximum time of 25 hours at a temperature of 285 °C.

The weight increase, of the compositions supported on gamma alumina, referred to 100 g of active material, is of at least 9 % as determined in a dynamic test at 285° C.

The compounds and compositions used in the method according to the invention absorb nitrogen oxides NOₓ, of which NO and NO₂ are the most representative, in the temperature range from ambient temperature or even below, down to 0 °C, to 420 °C, particularly in the presence of oxygen and optionally also of water vapor. The absorption is preferably carried out in the temperature range from 250 to 300 °C. It can also be performed in a fixed or fluid bed.

The materials, after the absorption step, are desorbed by heating at temperatures higher than 500 °C.

The following examples are provided to illustrate but not to limit the scope of the present invention.

### EXAMPLES

### Example 1

### Preparation of the Ca_{0.83}CuO₂ compound

9.58 g of CuO are dissolved in 36.4 g of 65% HNO₃ and 100 cc of water. 10 g of CaCO₃ are slowly added, followed by 94 g of citric acid monohydrate. The mixture is dried by agitation and heating.

The residue is heated for two hours at 400 °C and then calcined at 700 °C for 75 hours in air.

Subjected to the test in the boat-shaped vessel, the product absorbs 26.7% after 22 hours.

### Example 2

### Preparation of the Ca_{0.83}CuO₂ compound

16.6 g of CaCO₃ are dispersed under agitation in 100 cc of water. 36.2 g of formic acid are slowly added. Once reaction is complete, 16 g of CuO and 100 cc of water are added.

Heating is performed in order to dissolve the entire mixture, which is then slowly dried by agitation and heating.

Drying is performed at 150 °C for one night and calcination at 700 °C for 70 hours.

Subjected to the test in the boat-shaped vessel, the product absorbs 11.6% after 22 hours.

### Example 3

### Preparation of a product in which the Ca/Cu ratio is 0.5

9.58 g of CuO are dissolved in 30 g of 65% HNO₃ and 100 cc of water. 6.03 g of CaCO₃ are added slowly, followed by 77.34 g of citric acid monohydrate.

The mixture is dried by agitation and heating. The residue is calcined at 400 °C for 2 hours and then at 700 °C for 75 hours.

Subjected to the test in the boat-shaped vessel, the product absorbs 22.6% after 22 hours.

### Example 4

### Preparation of the Ca_{0.83}CuO₂ compound

56 g of sodium carbonate are dissolved in 1 liter of water.

20.76 g of CaCO₃ and 19.88 g of CuO are dispersed in 500 cc of water and 44.2 g of HCOOH are slowly added. This solution is poured over 10 minutes into the sodium carbonate solution under agitation. Agitation is then continued for another 5 minutes and then the mass is heated under agitation to 70 °C and kept at this temperature for one hour.

Cooling is performed, the precipitate is filtered and washed until the sodium disappears from the washing water.

The solid fraction is dried in an oven at 150 °C for one night and calcined at 400 °C for three hours and at 700 °C for 70 hours.

Subjected to the test in the boat-shaped vessel, the product absorbs 20.3% after 22 hours.

### Example 5

### Preparation of a product in which the Ca/Cu ratio is 0.83 and the Mn/Cu ratio is 0.2

61.4 g of sodium carbonate are dissolved in 1200 cc of water.

Dispersion is performed by agitating 20.66 g of CuO and 21.56 g of CaCO₃ in 500 cc of water, then 48.2 g of HCOOH are added slowly.

This solution is diluted with 400 cc of water, heating slightly in order to achieve complete dissolution. 18.4 g of manganese nitrate solution (50% by weight) are then added. The solution of Cu, Ca and Mn is poured into the sodium carbonate solution placed under agitation over 5 minutes. Heating to 60 °C is performed for 1 hour under agitation, then the precipitate is filtered and washing is performed until the sodium ion disappears from the washing water.

The solid fraction is dried in an oven at 150 °C for one night and calcined at 400 °C for 3 hours and at 700 °C for 70 hours.

Subjected to the test in the boat-shaped vessel, the product absorbs 9.4% after 22 hours.

### Example 6

### Preparation of a product in which the Ca/Cu ratio is 0.83 and the Mn/Cu ratio is 0.42.

68.02 g of sodium carbonate are dissolved in 1200 cc of water.

Dispersion is performed by agitating 20.66 g of CuO and 21.56 g of CaCO₃ in 500 cc of water, then 48.2 g of HCOOH are added slowly.

This solution is diluted with 400 cc of water, heating slightly in order to achieve complete dissolution. 38.8 g of manganese nitrate solution (50% by weight) are then added. The solution of Cu, Ca and Mn salts is poured into the sodium carbonate solution placed under agitation over 5 minutes. Heating to 60 °C is performed for 1 hour under agitation, then the precipitate is filtered and washed until the sodium ion disappears from the washing water.

The solid fraction is dried in an oven at 150 °C for one night and calcined at 400 °C for 3 hours and at 700 °C for 70 hours.

Subjected to the test in the boat-shaped vessel, the product absorbs 0.6% after 22 hours.

### Example 7

### Ca_{0.83}CuO₂ supported on gamma alumina

103 g of microspheroidal gamma alumina having a specific surface of 180 m²/g and a pore volume of 0.50 cc/g are impregnated a first time with a solution prepared as follows:

5.53 g of CuO are suspended in 20 cc of water and slowly added with 12.9 g of HCOOH. Once the reaction has been completed, 5.78 g CaCO₃ are added in small portions.

At the end of the generation of CO₂, the volume is brought to 60 cc and slight heating is performed in order to achieve complete dissolution.

The carrier is impregnated in a rotating vessel, the mass is left to rest for 2 hours and then the product is dried at 150 °C for one night.

The dry product is reimpregnated with a solution prepared as follows: 4.8 g of CuO are suspended in 20 cc of water and slowly added with 11.2 g of HCOOH. Once the reaction has been completed, 5 g of CaCO₃ are added in small portions.

At the end of the generation of CO₂, the volume is brought to 55 cc and slight heating is performed in order to achieve complete dissolution.

The carrier is impregnated in a rotating vessel, the mass is left to rest for 2 hours and then the product is dried at 150 °C for one night. The final product is calcined at 700 °C for 70 hours.

Subjected to the test in a flow reactor, the sample purifies the gas stream at the space velocity of 5000h⁻¹ in 1 hour and 33 minutes.

### Example 8

### A product in which the Ca/Cu ratio is 0.83 and the Mn/Cu ratio is 0.2, supported on gamma alumina.

100 g of microspheroidal gamma alumina having a specific surface of 180 m²/g and a pore volume of 0.50 cc/g are impregnated a first time, in a rotating vessel, with 9.22 g of a solution of manganese nitrate (50% by weight), diluted to 60 cc with water.

The mass is left to rest for 2 hours and then the product is dried at 150 °C for one night and treated at 300 °C for 3 hours.

5.53 g of CuO are suspended in 20 cc of water and slowly added with 12.9 g of HCOOH. Once the reaction has been completed, 5.78 g of CaCO₃ are added in small portions.

At the end of the generation of CO₂, the volume is brought to 600 cc and slight heating is performed in order to achieve complete solubilization.

The product of the first impregnation is impregnated in a rotating vessel, the mass is left to rest for 2 hours and then the product is dried at 150 °C for one night.

The dry product is reimpregnated with a solution prepared as follows: 4.8 g of CuO are suspended in 20 cc of water and slowly added with 11.2 g of HCOOH. Once the reaction has been completed, 5 g of CaCO₃ are added in small portions.

At the end of the generation of CO₂, the volume is brought to 55 cc and slight heating is performed in order to achieve complete solubilization.

The product of the preceding operation is impregnated in a rotating vessel, the mass is left to rest for 2 hours and then the product is dried at 150 °C for one night. The final product is calcined at 700 °C for 70 hours.

Subjected to the test in a flow reactor, the sample purifies the gas stream at the space velocity of 5000h⁻¹ in 1 hour and 46 minutes.

### Example 9

### A product in which the Ca/Cu ratio is 0.83 and the Mn/Cu ratio is 0.42 supported on gamma alumina,

300 g of microspheroidal gamma alumina having a specific surface of 180 m²/g and a pore volume of 0.50 cc/g are impregnated a first time, in a rotating vessel, with 58.2 g of a solution of manganese nitrate (50% by weight), diluted to 165 cc with water.

The mass is left to rest for 2 hours and then the product is dried at 150°C for one night and treated at 300 °C for 16 hours.

16.6 g of CuO are suspended in 60 cc of water and slowly added with 38.7 g of HCOOH. Once the reaction has been completed, 17.34 g of CaCO₃ are added in small portions.

At the end of the generation of CO₂, the volume is brought to 175 cc and slight heating is performed in order to achieve complete solubilization.

The product of the first impregnation is impregnated in a rotating vessel, the mass is left to rest for 2 hours and then the product is dried at 150 °C for one night.

The dry product is reimpregnated with a solution prepared as follows: 14.4 g of CuO are suspended in 20 cc of water and slowly added with 33.6 g of HCOOH. Once the reaction has been completed, 15 g of CaCO₃ are added in small portions.

At the end of the generation of CO₂, the volume is brought to 165 cc and slight heating is performed in order to achieve complete solubilization.

The product of the preceding operation is impregnated in a rotating vessel, the mass is left to rest for 2 hours and then the product is dried at 150 °C for one night. The final product is calcined at 700 °C for 70 hours.

Subjected to the test in a flow reactor, the sample purifies the gas stream at the space velocity of 5000h⁻¹ in 1 hour and 58 minutes.

### Example 10

### Ca_{0.83}CuO₂ compound supported on gamma alumina

103 g of trilobated pellets of gamma alumina, with a specific surface of 174 m²/g and a pore volume of 0.47 cc/g, are impregnated a first time in a rotating vessel with a solution prepared as follows: 5.53 g of CuO are suspended in 20 cc of water and slowly added with 12.9 g of HCOOH. Once reaction is complete, 5.78 g of CaCO₃ are added in small doses. At the end of the generation of CO₂, the mixture is brought to a volume of 60 cc with water and slight heating is performed in order to achieve complete solubilization.

After impregnation, the mass is left to rest for two hours and then dried for one night at 150 °C; the dried product is reimpregnated with a solution prepared as follows:

4.8 g of CuO are suspended in 20 cc of water and slowly added with 11.2 g of HCOOH. Once the reaction has ended, 5 g of CaCO₃ are added in small portions. At the end of the generation of CO₂, the mass is brought to a volume of 55 cc with water and slight heating is performed in order to achieve complete solubilization.

After impregnation, the mass is left to rest for 2 hours and then dried for one night at 150 °C.

The dried product is calcined in air at 700 °C for 70 hours.

The calcined product is milled and screened in order to obtain a fraction to be subjected to the test in the flow reactor. The sample purifies the gas stream, at the space velocity of 5000h⁻¹, in 1 hour and 10 minutes.

### Example 11

### A product in which the Ca/Cu ratio is 0.83 and the Mn/Cu ratio is 0.42 supported on gamma alumina.

10 g of trilobated pellets of gamma alumina, with a specific surface of 174 m²/g and a pore volume of 0.47 cc/g, are impregnated a first time in a rotating vessel with a solution prepared as follows: 5.53 g of CuO are suspended in 20 cc of water and slowly added with 12.9 g of HCOOH. Once reaction is complete, 9.7 g of of a solution of manganese nitrate (50% by weight) are added. The mixture is brought to a volume of 60 cc with water and slight heating is performed in order to achieve complete solubilization.

After impregnation, the mass is left to rest for 2 hours and then dried for one night at 150 °C.

The dried product is calcined in air at 700 °C for 70 hours.

The calcined product is milled and screened in order to obtain a 300-to-500-micron fraction to be subjected to the test in the flow reactor. The sample purifies the gas stream, at the space velocity of 5000h⁻¹, in 1 hour and 35 minutes.

### Example 12

679 g of commercial pseudoboehmite are impregnated in a rotating vessel with a solution prepared as follows:

49.7 g of CuO are dispersed in 200 cc of water, and 121 g of formic acid are slowly added. At the end of the reaction, 54 g of CaCO₃ are slowly added, water is added until dissolution is achieved, and then 97 g of manganese nitrate solution (50% by weight) are added. Water is added to a volume of 700 cc, the carrier is impregnated with half the solution, drying is performed at 120 °C for one night, and then the product is reimpregnated with the other half of the solution.

Drying is performed again at 120 °C for one night and then the product is pelletized in the form of trilobated pellets by using aluminum stearate as lubricant.

The pellets are calcined in air at 700 °C for 24 hours.

The calcined product is milled and screened in order to obtain a fraction between 300 and 500 microns to be subjected to the test in the flow reactor. The sample purifies the gas stream, at the space velocity of 5000h⁻¹, in 2 hours and 3 minutes.

The disclosures in Italian Patent Application No. MI2004A002455 from which this application claims priority are incorporated herein by reference.

## Claims

1. A method for removing nitrogen oxides NOₓ from gas mixtures that contain them, comprising contacting of the gas mixtures with an absorbent material comprising compounds having formula CaCuO₂ and/or Ca_{0.83}CuO₂ providing X-ray diffraction powder spectra that correspond, for the CaCuO₂ compound, to JCPDS card 48-197 and, for the Ca_{0.83} CuO₂, to JCPDS card 48-212, or mixtures of said compounds or compositions containing them.

2. The method according to claim 1, wherein the Ca_{0.83} CuO₂ compound is present in compositions in which the Ca/Cu ratio varies from 0.2 to 0.9 and the CaCuO₂ compound is present in compositions in which the Ca/Cu ratio varies from 0.95 to 2.

3. The method according to claims 1 and 2, wherein the compounds are present in compositions which comprise Mn containing compounds in which the Ca/Cu ratio varies from 0.2 to 1.9 and the Mn/Cu ratio from 0.1 to 0.5.

4. The method according to claim 3, wherein the Ca/Cu ratio is 0.83 and the Mn/Cu ratio varies from 0.2 to 0.4.

5. The method according to anyone of claims 1 to 4, wherein the compounds or the compositions thereof are supported on alumina.

6. The method according to claim 5, wherein the supported compositions have a Ca/Cu ratio which ranges from 0.2 to 1.9 while the Mn/Cu ratio is from 0.1 to 0.9.

7. The method according to claim 6, wherein the composition has a Ca/Cu ratio of 0.83 and an Mn/Cu ratio of 0.42.

8. The method according to anyone of claims 5 to 7, wherein the compounds or the compositions thereof are supported on gamma alumina having a specific area from 90 to 260 m²/g.

9. The method according to claim 8, wherein the composition in which the Ca/Cu ratio is 0.83 and the Mn/Cu ratio is 0.42 is supported on gamma alumina in a quantity from 5 to 20% by weight.

10. The method according to anyone of claims 1 to 9, wherein the absorption of the nitrogen oxides is performed at temperatures from 0 to 420°C in the presence of oxygen and optionally also of water vapor.

11. The method according to claim 10, wherein the absorption is performed at temperatures from 250 to 420 °C.

12. The method according to claim 11, wherein the absorption is performed at temperatures from 280 to 300 °C.

13. The method according to each one of claims 10 to 12, wherein the nitrogen oxides are NO and NOₓ and mixtures thereof containing oxygen.

14. The method according to anyone of claims 1 to 13, wherein the material coming from the absorption step is desorbed by heating to temperatures higher than 500 °C.

15. A nitrogen oxides NOₓ absorbing material in which the Ca/Cu ratio is 0.83 and the Mn/Cu ratio varies from 0.1 to 0.9.

16. An absorbing material according to claim 15, having a Ca/Cu ratio of 0.83 and a Mn/Cu ratio of 0.42.

17. The absorbing material according to anyone of claims 15 and 16, supported on gamma alumina.

18. The material according to claim 17, wherein the material has an absorption capability referred to the active phase, expressed as weight increase, of at least 9% as determined in a dynamic test performed at 285°C.
